# EUROPÄISCHE PATENTSCHRIFT

(11) **EP 3 040 640 B1**
(45) Veröffentlichungstag und Bekanntmachung des Hinweises auf die Patenterteilung: **20.12.2017**
(21) Anmeldenummer: 16152545.6
(22) Anmeldetag: 25.01.2016
(51) Int. Cl.: F24J 2/52

(54) **ENDHALTER UND BEFESTIGUNGSSYSTEM ZUR MONTAGE VON SOLARMODULEN**
END HOLDER AND FASTENING SYSTEM FOR MOUNTING SOLAR MODULES
CRAMPON TERMINAL ET SYSTEME DE FIXATION POUR LE MONTAGE DE PANNEAUX SOLAIRES

(30) Priorität: 26.11.2014 DE 202014009489 U
(43) Veröffentlichungstag der Anmeldung: 06.07.2016
(73) Patentinhaber: Mounting Systems GmbH, 15834 Rangsdorf (DE)
(72) Erfinder: Redel, Mark, 15827 Blankenfelde-Mahlow (DE)
(74) Vertreter: Eisenführ Speiser

(56) Entgegenhaltungen:
- CN-A- 102 263 149
- DE-U1-202009 010 487
- DE-U1-202011 107 843
- DE-U1-202012 006 839

## Beschreibung

Die Erfindung betrifft einen Endhalter sowie ein Befestigungssystem zur Montage von Solarmodulen.

Solarmodule, beispielsweise Photovoltaikmodule zur Erzeugung elektrischer Energie oder Kollektormodule zur Erwärmung von Wärmeträgermedien, werden üblicherweise in Dach- oder Freilandmontage auf parallel zueinander angeordneten Profilschienen befestigt. Es existiert eine Vielzahl von Solarmodulen, die sich hinsichtlich ihrer Abmessungen und Anordnungsmöglichkeiten unterscheiden. Unterschiedliche Typen von Solarmodulen weisen dabei unterschiedliche Modulhöhen auf. Dies betrifft insbesondere gerahmte Solarmodule. Montagesysteme für Solarmodule sollten daher möglichst variabel einsetzbar sein und eine schnelle und einfache Montage ermöglichen.

Aus DE 20 2013 005 668 ist ein höhenverstellbarer Endhalter bekannt, der mit Hilfe seines Höhenstellelementes so justiert werden kann, dass er für Module unterschiedlicher Höhe verwendet werden kann. Die hierfür nötige Höhenverstellung erfolgt stufenweise. Aus DE 20 2011 107 843 ist ein höhenverstellbarer Endhalter mit den Merkmalen des Oberbegriffs des Anspruchs 1 bekannt. Ein erster Aspekt der vorliegenden Erfindung betrifft einen höhenverstellbaren Endhalter zur Befestigung von Solarmodulen unterschiedlicher Höhe an einer Profilschiene, mit
- einem von einem ersten und einem zweiten Aufnahmeschenkel gebildeten Aufnahmewinkelelement, wobei am ersten Aufnahmeschenkel eine Aufnahme für ein zu montierendes Solarmodul ausgebildet ist,
- einem Befestigungselement zur Befestigung an einer Profilschiene,
- einem Verstellelement, das das Aufnahmewinkelelement am Befestigungselement höhenverstellbar befestigt und ausgebildet ist, in einem montierten Zustand bei einem einstellbaren Abstand der Aufnahme von der Profilschiene über die Aufnahme einen Anpressdruck auf das zu montierende Solarmodul zu erzeugen, wobei
- der zweite Aufnahmeschenkel auf seiner dem ersten Aufnahmeschenkel zugewandten Seite ein erstes Sägezahnprofil aufweist,
- das Befestigungselement an seiner dem zweiten Aufnahmeschenkel zugewandten Seite ein zweites Sägezahnprofil aufweist,
- wobei das erste Sägezahnprofil und das zweite Sägezahnprofil derart ausgebildet sind, dass im montierten Zustand unter dem Anpressdruck des Verstellelements eine Relativbewegung des Aufnahmewinkelelementes und des Befestigungselementes zueinander in einer Höhenrichtung, die senkrecht zu einer Längsrichtung der Profilschiene steht, blockiert ist, und in einem nicht-montierten Zustand eine Relativbewegung des Aufnahmewinkelelementes und des Befestigungselementes zueinander in der Höhenrichtung möglich ist, wobei das Befestigungselement aufweist:
   - einen Kliphalter mit einer Kopfplatte mit einer Gewindebohrung sowie zwei seitlich an der Kopfplatte einander gegenüberliegend angeordnete Kliphalterschenkel, deren von der Kopfplatte abgewandte Enden Haken aufweisen, die ausgebildet sind, Kröpfungen zu hintergreifen und
   - ein von einem ersten und einem zweiten Befestigungsschenkel gebildetes Befestigungswinkelelement, wobei das zweite Sägezahnprofil am zweiten Befestigungsschenkel ausgebildet ist und wobei
das Verstellelement das Befestigungswinkelelement am Kliphalter befestigt. Der erfindungsgemäße Endhalter wird bestimmungsgemäß zur Halterung genau eines Solarmodules eingesetzt, beispielsweise am Ende einer Reihe von Solarmodulen. Im Unterschied zu einem Modulhalter, der zwischen zwei Modulen angeordnet ist und bei dem jeweils die Module selbst den Anschlag bilden, muss der Endhalter, da mit ihm nur ein Modul befestigt wird, selbst den Anschlag vorgeben.

Die Erfindung ermöglicht es, Einstellungen unterschiedlicher Höhen der Aufnahme des Endhalters über zwei einander zugewandte Sägezahnprofile an einem Aufnahmewinkelelement und einem Befestigungselement einzustellen. Diese Lösung weist den Vorteil auf, dass sie eine besonders einfach handhabbare, quasi stufenlose und somit besonders genaue Höheneinstellung erlaubt. Gleichzeitig bieten die Sägezahnprofile eine besonders sichere Einstellung der gewünschten Höhe im montierten Zustand. Die vorliegende Erfindung erzielt damit den Vorteil, ein verbessertes Montagesystem sowie einen vereinfachten Endhalter bereitzustellen, der variabel für unterschiedliche Modulhöhen einsetzbar ist. Beim Endhalter gemäß der vorliegenden Erfindung kann die Höhe über die Verschiebung des Befestigungselementes und des Aufnahmewinkelelementes zueinander im nicht montierten Zustand voreingestellt werden und mit Hilfe des Verstellelementes im Montagezustand feinjustiert werden. Damit ist eine einfache Montage unterschiedlicher Module möglich.

Der Abstand der Aufnahme des Endhalters von einer Profilschiene, auf der der Endhalter montiert wird, also die Höheneinstellung, ergibt sich beim erfindungsgemäßen Endhalter aus der Relativverschiebung des Befestigungswinkelelementes und des Aufnahmewinkelelementes zueinander. Durch die Verschiebung der Sägezahnprofile zueinander ist somit eine einfache Justage möglich. Die Höheneinstellung ist quasi stufenlos möglich, da der Abstand benachbarter Höheneinstellungen nur von der Breite eines einzelnen Sägezahns des Sägezahnprofils abhängt.

Nachfolgend werden Ausführungsformen und bevorzugte Anwendungsfälle des höhenverstellbaren Endhalters beschrieben.

In einer Ausführungsform, die nicht Teil der Erfindung ist, ist das Befestigungselement ein Kliphalter, mit einer Kopfplatte mit einer Gewindebohrung sowie zwei seitlich an der Kopfplatte einander gegenüberliegend angeordneten Kliphalterschenkeln, deren von der Kopfplatte abgewandte Enden Haken aufweisen, die ausgebildet sind, Kröpfungen zu hintergreifen, wobei sich das zweite Sägezahnprofil an Schmalseiten der Kliphalterschenkel sowie an einer zwischen den Kliphalterschenkeln liegenden Schmalseite der Kopfplatte erstreckt. Das Befestigungselement der Erfindung weist einen Kliphalter mit einer Kopfplatte mit einer Gewindebohrung sowie zwei seitlich an der Kopfplatte einander gegenüberliegend angeordnete Kliphalterschenkel auf, deren von der Kopfplatte abgewandte Enden Haken aufweisen, die ausgebildet sind, Kröpfungen zu hintergreifen und ein von einem ersten und einem zweiten Befestigungsschenkel gebildetes Befestigungswinkelelement, wobei das zweite Sägezahnprofil am zweiten Befestigungsschenkel ausgebildet ist. Das Befestigungswinkelelement ist über das Verstellelement am Kliphalter befestigt.

Die Verwendung von Befestigungselementen, die einen Kliphalter umfassen ist vorteilhaft, da Kliphalter schnell und unkompliziert an Profilschienen befestigt werden können und so zu einer einfach handhabbaren Montage beitragen.

In einer bevorzugten Ausführungsform ist das Verstellelement eine Schraube.

Gemäß einem zweiten Aspekt betrifft die Erfindung ein Befestigungssystem, das mindestens einen erfindungsgemäßen Endhalter und mindestens eine Profilschiene umfasst, an der der Endhalter befestigt ist.

Der Endhalter ist in einer Ausführungsform ausgebildet, Modul- oder Rahmenhöhen im Bereich von 30 bis 50 mm zu halten. Andere Modul- oder Rahmenhöhen sind ebenfalls realisierbar, und können durch Anpassung der Länge des Aufnahmewinkelelementes und des Befestigungselementes ermöglicht werden.

Gemäß einer bevorzugten Anwendungsform des Endhalters, die einen zweiten Aspekt der Erfindung bildet, umfasst Befestigungssystem mindestens einen Endhalter gemäß dem ersten Aspekt der Erfindung oder einer seiner Ausführungsformen und mindestens eine Profilschiene, an der der Endhalter befestigt ist.

In einer Ausführungsform des Befestigungssystems ist der Endhalter quer zur Profilschiene montiert. Das bedeutet, dass der zweite Aufnahmeschenkel im Montagezustand quer zur Profilschiene angeordnet ist. In einer weiteren Ausführungsform des Befestigungssystems ist der Endhalter parallel zur Profilschiene montiert.

Weitere Merkmale und Vorteile werden bei Betrachtung der nachfolgend mit Bezug auf die Figuren beschriebenen Ausführungsbeispiele offensichtlich werden. Es zeigen
- Fig. 1: eine Ausführungsform eines höhenverstellbaren Endhalters in einer perspektivischen Darstellung.
- Fig. 2: eine Teilansicht einer Ausführungsform eines Befestigungssystems in einer perspektivischen Darstellung.
- Fig. 3: schematisch unterschiedliche Höheneinstellungen einer Ausführungsform des höhenverstellbaren Endhalters in einem Befestigungssystem.

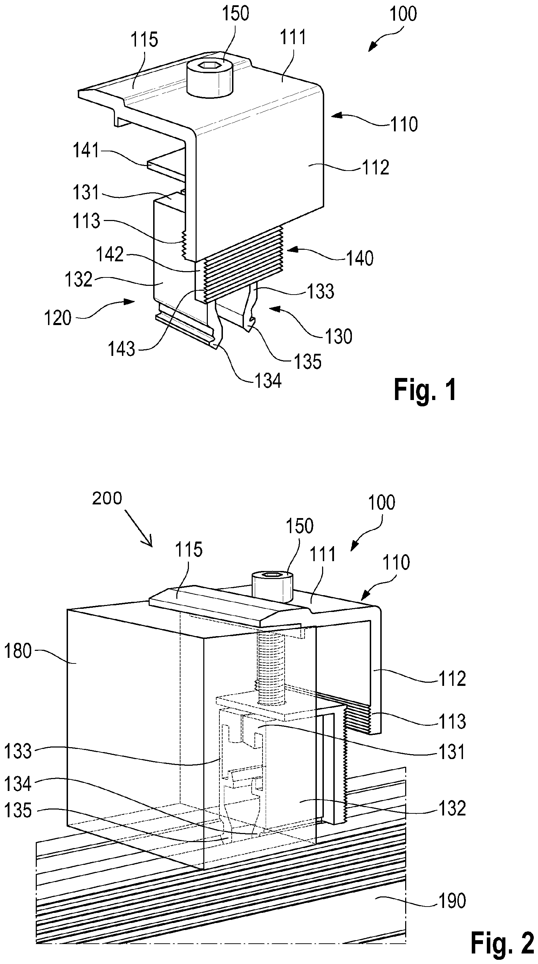

Fig. 1 zeigt eine Ausführungsform eines höhenverstellbaren Endhalters 100 gemäß dem ersten Aspekt der Erfindung.

Der Endhalter 100 weist ein Aufnahmewinkelelement 110 sowie ein Befestigungselement 120 und ein Verstellelement 150 auf. Das Verstellelement 150 ist in der vorliegenden Ausführungsform als Schraube ausgebildet. Das Verstellelement ist dabei ausgebildet, in einem hier nicht dargestellten montierten Zustand bei einem einstellbaren Abstand der Aufnahme 115 von der Profilschiene über die Aufnahme 115 einen Anpressdruck auf das zu montierende Solarmodul zu erzeugen. Das Aufnahmewinkelelement 110 wird von einem ersten Aufnahmeschenkel 111 und einem zweiten Aufnahmeschenkel 112 gebildet. Am ersten Aufnahmeschenkel 111 ist eine Aufnahme 115 für ein zu montierendes Solarmodul ausgebildet. Desweiteren weist der erste Aufnahmeschenkel 111 eine Bohrung zur Aufnahme des Verstellelementes 150 auf. Am zweiten Aufnahmeschenkel 112 ist auf seiner dem ersten Aufnahmeschenkel 111 zugewandten Seite ein erstes Sägezahnprofil 113 angeordnet. Das Befestigungselement 120 weist in der gezeigten Ausführungsform einen Kliphalter 130 und ein Befestigungswinkelelement 140 auf. Das Befestigungswinkelelement 140 wird von einem ersten Befestigungsschenkel 141 und einem zweiten Befestigungsschenkel 142 gebildet. Der erste Befestigungsschenkel 141 weist wie auch der erste Aufnahmeschenkel 111 eine Bohrung (hier nicht sichtbar) zur Aufnahme des Verstellelementes auf. Am zweiten Befestigungsschenkel 142 ist auf seiner dem zweiten Aufnahmeschenkel 112 zugewandten Seite ein zweites Sägezahnprofil 143 angeordnet. Der Kliphalter 130 weist eine Kopfplatte 131 auf mit einer Gewindebohrung zur Aufnahme des Verstellelementes 150 sowie zwei seitlich an der Kopfplatte 131 einander gegenüberliegend angeordnete Kliphalterschenkel 132, 133, deren von der Kopfplatte abgewandte Enden Haken 134, 135 aufweisen, die ausgebildet sind, Kröpfungen zu hintergreifen. Das Aufnahmewinkelelement 110 ist durch das Verstellelement 150 am Befestigungselement 120 höhenverstellbar befestigt. Das erste Sägezahnprofil 113 und das zweite Sägezahnprofil 143 sind derart ausgebildet, dass in einem hier nicht dargestellten montierten Zustand unter dem Anpressdruck des Verstellelements 150 eine Relativbewegung des Aufnahmewinkelelementes 110 und des Befestigungselementes 120 zueinander in einer Höhenrichtung, die senkrecht zu einer Längsrichtung der Profilschiene steht, blockiert ist, und in hier gezeigten nicht-montierten Zustand eine Relativbewegung des Aufnahmewinkelelementes 110 und des Befestigungselementes 120 zueinander in der Höhenrichtung möglich ist.

Fig. 2 zeigt eine Ausführungsform eines Befestigungssystems 200 gemäß dem zweiten Aspekt der Erfindung mit einem Endhalter 100 der in Fig. 1 dargestellten Ausführungsform in einer perspektivischen Ansicht. Das Befestigungssystem 200 umfasst einen Endhalter 100, der an einer Profilschiene 190 befestigt ist. Das zu montierende Solarmodul 180 ist hier durch einen transparenten Quader symbolisiert. In dieser perspektivischen Ansicht ist zu erkennen, dass die am ersten Aufnahmeschenkel 111 angebrachte Aufnahme 115 des Endhalters das Solarmodul 180 aufnimmt und über das Anziehen des als Schraube ausgebildeten Verstellelementes 150 ein Anpressdruck auf die Profilschiene realisiert wird. Der Kliphalter 130 greift hier im montierten Zustand mit den Haken 134, 135, die an den Kliphalterschenkeln 132, 133 ausgebildet sind, in die Profilschiene 190 ein und sorgt so für eine einfach handhabbare Befestigung an der Profilschiene 190. Die Kopfplatte 131 des Kliphalters 130 weist eine Gewindebohrung auf, in die das Verstellelement 150 aufgenommen wird. Wie in dieser Ansicht zu erkennen ist, ist das erste Sägezahnprofil 113 in der hier gezeigten Ausführungsform nur über einen Teil der Länge des zweiten Aufnahmeschenkels 112 ausgebildet. Alternativ ist in einer hier nicht gezeigten Ausführungsform auch die Ausführung des Sägezahnprofils 113 über die vollständige Länge des zweiten Aufnahmeschenkels 112 möglich.

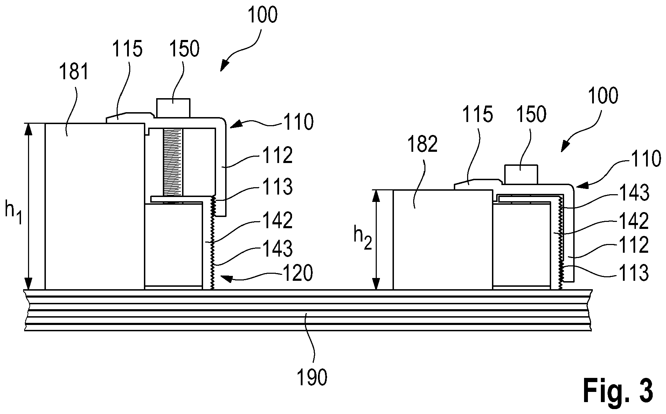

In Fig. 3 ist schematisch gezeigt, wie unterschiedliche Modulhöhen mit einem höhenverstellbaren Endhalter 100 gemäß dem ersten Aspekt der Erfindung in einem Befestigungssystem realisiert werden können. In der gezeigten Ausführungsform weist das Modul 181 eine Modulhöhe von ca. 50 mm und das Modul 182 eine Modulhöhe von ca. 30 mm auf. Die unterschiedlichen Höhen h1 und h2, die die Aufnahme 115 über der Profilschiene 190 aufweist werden über die Relativbewegung des Aufnahmewinkelelementes 110 und des Befestigungselementes 120 zueinander realisiert. Das Verstellelement 150 sorgt dafür, dass im montierten Zustand ein Anpressdruck herrscht, so dass die Sägezahnprofile 143 und 113 nicht mehr gegeneinander verschoben werden können. Dabei gibt der zweite Aufnahmeschenkel 112 des Aufnahmewinkelelementes 110 zusammen mit dem zweiten Befestigungsschenkel 142 die Anschlagshöhen h1 und h2 durch die jeweils über das Verstellelement 150 eingestellte Überlappung Aufnahmeschenkel 112 und des Befestigungsschenkels 142 vor.

## Patentansprüche

1. Höhenverstellbarer Endhalter (100) zur Befestigung von Solarmodulen unterschiedlicher Höhe an einer Profilschiene, mit
- einem von einem ersten und einem zweiten Aufnahmeschenkel (111, 112) gebildeten Aufnahmewinkelelement (110), wobei am ersten Aufnahmeschenkel (111) eine Aufnahme (115) für ein zu montierendes Solarmodul ausgebildet ist,
- einem Befestigungselement (120) zur Befestigung an einer Profilschiene,
- einem Verstellelement (150), das das Aufnahmewinkelelement (110) am Befestigungselement (120) höhenverstellbar befestigt und ausgebildet ist, in einem montierten Zustand bei einem einstellbaren Abstand der Aufnahme (115) von der Profilschiene über die Aufnahme (115) einen Anpressdruck auf das zu montierende Solarmodul zu erzeugen, wobei
- der zweite Aufnahmeschenkel (112) auf seiner dem ersten Aufnahmeschenkel (111) zugewandten Seite ein erstes Sägezahnprofil (113) aufweist,
- das Befestigungselement (120) an seiner dem zweiten Aufnahmeschenkel zugewandten Seite ein zweites Sägezahnprofil (143) aufweist,
- wobei das erste Sägezahnprofil (113) und das zweite Sägezahnprofil (143) derart ausgebildet sind, dass im montierten Zustand unter dem Anpressdruck des Verstellelements (150) eine Relativbewegung des Aufnahmewinkelelementes (110) und des Befestigungselementes (120) zueinander in einer Höhenrichtung, die senkrecht zu einer Längsrichtung der Profilschiene steht, blockiert ist, und in einem nicht-montierten Zustand eine Relativbewegung des Aufnahmewinkelelementes (110) und des Befestigungselementes (120) zueinander in der Höhenrichtung möglich ist, wobei
das Befestigungselement aufweist:
- einen Kliphalter (130) mit einer Kopfplatte (131) mit einer Gewindebohrung sowie zwei seitlich an der Kopfplatte einander gegenüberliegend angeordnete Kliphalterschenkel (132,133), deren von der Kopfplatte abgewandte Enden Haken (134, 135) aufweisen, die ausgebildet sind, Kröpfungen zu hintergreifen **dadurch gekennzeichnet, dass** das Befestigungselement (120) aufweist:
- ein von einem ersten und einem zweiten Befestigungsschenkel (141, 142) gebildetes Befestigungswinkelelement (140), wobei das zweite Sägezahnprofil (143) am zweiten Befestigungsschenkel (142) ausgebildet ist und wobei
das Verstellelement (150) das Befestigungswinkelelement (140) am Kliphalter (130) befestigt

2. Endhalter (100) nach Anspruch 1, bei dem das Verstellelement (150) eine Schraube ist.

3. Befestigungssystem (200) umfassend mindestens einen Endhalter (100) nach einem der Ansprüche 1 bis 2 und mindestens eine Profilschiene (190), an der der Endhalter befestigt ist.

## Claims

1. Height-adjustable end holder (100) for securing solar modules of differing height to a profiled rail, comprising
- a mounting bracket element (110) formed by a first and a second mounting web (111, 112), a mount (115) for a solar module to be mounted being provided on the first mounting web (111),
- a fastening element (120) for fastening to a profiled rail,
- an adjusting element (150) which secures the mounting bracket element (110) to the fastening element (120) in a height-adjustable manner and which, in a mounted state when the mount (115) is at an adjustable distance from the profiled rail, is designed to generate a contact pressure on the solar module to be mounted via the mount (115), and
- the second mounting web (112) has a first sawtooth profile (113) on its side facing the first mounting web (111),
- the fastening element (120) has a second sawtooth profile (143) on its side facing the second mounting web,
- and the first sawtooth profile (113) and the second sawtooth profile (143) are designed so that in the mounted state under the contact pressure of the adjusting element (150), a movement of the mounting bracket element (110) and fastening element (120) relative to one another in a height direction extending perpendicular to a longitudinal direction of the profiled rail is blocked and in a non-mounted state, a movement of the mounting bracket element (110) and the fastening element (120) relative to one another in the height direction is possible, and
the fastening element comprises:
- a clip holder (130) with a head plate (131) having a threaded bore and two clip holder webs (132, 133) disposed laterally opposite one another on the head plate, the ends of which remote from the head plate have hooks (134, 135) which are designed to engage behind bent regions, **characterised in that**
the fastening element comprises:
- a fastening bracket element (140) formed by a first and a second fastening web (141, 142), the second sawtooth profile (143) being provided on the second fastening web (142), and
the adjusting element (150) secures the fastening bracket element (140) to the clip holder (130).

2. End holder (100) as claimed in claim 1, wherein the adjusting element (150) is a screw.

3. Fastening system (200) comprising at least one end holder (100) as claimed in one of claims 1 to 2 and at least one profiled rail (190) to which the end holder is secured.

## Revendications

1. Crampon terminal réglable en hauteur (100) pour la fixation de modules solaires de différente hauteur à un rail profilé, avec
- un élément de cornière de réception (110) formé par une première aile de réception et une seconde aile de réception (111, 112), dans lequel un logement (115) pour un module solaire à monter est formé sur la première aile de réception (111),
- un élément de fixation (120) pour la fixation à un rail profilé,
- un élément de réglage (150), qui fixe de façon réglable en hauteur l'élément de cornière de réception (110) à l'élément de fixation (120) et qui est réalisé de façon à produire, dans un état monté avec une distance réglable entre le logement (115) et le rail profilé, au moyen du logement (115) une pression de serrage sur le module solaire à monter, dans lequel
- la seconde aile de réception (112) présente sur son côté tourné vers la première aile de réception (111) un premier profil en dents de scie (113),
- l'élément de fixation (120) présente sur son côté tourné vers la seconde aile de réception un second profil en dents de scie (143),
- dans lequel le premier profil en dents de scie (113) et le second profil en dents de scie (143) sont réalisés de telle manière que dans l'état monté, sous la pression de serrage de l'élément de réglage (150), un mouvement relatif de l'élément de cornière de réception (110) et de l'élément de fixation (120) l'un par rapport à l'autre dans une direction verticale, qui est perpendiculaire à une direction longitudinale du rail profilé, soit bloqué et que dans un état non monté un mouvement relatif de l'élément de cornière de réception (110) et de l'élément de fixation (120) l'un par rapport à l'autre dans la direction verticale soit possible, dans lequel
l'élément de fixation présente:
- un support à déclic (130) avec une plaque de tête (131) présentant un trou fileté ainsi que deux ailes de support à déclic (132, 133) disposées latéralement l'une en face de l'autre sur la plaque de tête, dont les extrémités éloignées de la plaque de tête présentent des crochets (134, 135), qui sont réalisés de façon à s'accrocher derrière des coudes,
**caractérisé en ce que** l'élément de fixation présente:
- un élément de cornière de fixation (140) formé par une première et une seconde ailes de fixation (141, 142), dans lequel le second profil en dents de scie (143) est formé sur la seconde aile de fixation (142) et dans lequel
- l'élément de réglage (150) fixe l'élément de cornière de fixation (140) au support à déclic (130).

2. Crampon terminal (100) selon revendication 1, dans lequel l'élément de réglage (150) est une vis.

3. Système de fixation (200) comprenant au moins un crampon terminal (100) selon une des revendications 1 à 2 et au moins un rail profilé (190), sur lequel le crampon terminal est fixé.
